# EUROPEAN PATENT SPECIFICATION

(11) **EP 2 426 518 B1**
(45) Date of publication and mention of the grant of the patent: **02.03.2016**
(21) Application number: 11178423.7
(22) Date of filing: 23.08.2011
(51) Int. Cl.: G01W 1/14

(54) **Rain Sensor**
Regensensor
Capteur de pluie

(30) Priority: 01.09.2010 DE 202010008422 U
(43) Date of publication of application: 07.03.2012
(73) Proprietor: Somfy SAS, 74300 Cluses (FR)
(72) Inventor: Härter, Tobias, 72348 Rosenfeld-Bickelsberg (DE); Rebel, Volkmar, 72108 Rottenburg-Dettingen (DE)
(74) Representative: Viering, Jentschura & Partner mbB Patent- und Rechtsanwälte

(56) References cited:
- WO-A1-94/01649
- GB-A- 2 003 611
- US-A- 3 873 927
- US-B2- 7 716 981

## Description

The invention relates to a rain sensor, for example, for use as a sensor to detect humidity or a liquid.

Rain sensors are, for example, used to determine whether and/or how hard it is raining, in order to initiate a corresponding action based on the result. For example, rain sensors may be used to detect beginning rain and to close windows of a building automatically or to activate roller shutters or external blinds in case of rain.

Rain sensors generally comprise electronic components which are not supposed to be exposed to water or any other liquid to be detected.

GB 2 003 611 A discloses a moister tester comprising a probe with a measuring head and a probe carrier comprising electrical circuits for deriving a value of the moister content of the tested material. The probe comprises a body insulating material with a first protruding therefrom and forming one plate of a capacitor, and additional rods positioned in an open arrangement around said first rod and being interconnected with each other to form the other plate of the capacitor.

US 3 873 927 A, US 7 716 981 B2, and WO 94/01649 A1 disclose further sensors for detecting rain and/or moisture.

The invention provides a rain sensor that can be produced easily and in a cost-effective manner and, nevertheless, allows effective protection of electronic components and any other component parts of the rain sensor against liquid, such as rain water.

According to the invention, a rain sensor is provided for this purpose, having a housing closed all around and in a waterproof manner, which comprises a lower housing part and an upper housing part separate therefrom, wherein the upper housing part and the lower housing part are connected to each other especially along a housing division line thereby forming the housing, and wherein the upper housing part comprises an MID component part and is, in particular, formed as a Molded Interconnect Devices (MID) component part comprising a base body made of an electrically insulating material, which describes the external shape of the upper housing part, and sensor conductor elements made of an electrically conductive material and being formed on and/or in the base body, which sensor conductor elements form at least part of a sensor element for detecting humidity, especially rain.

Here, the term "MID component part" designates a component part in MID (Molded Interconnect Devices) technology, i.e., a molded part having an integrated conductor structure, also referred to as an injection-molded interconnect device. The sensor conductor elements integrated into the upper housing part and the MID component part, respectively, at least form part of the sensor element. However, the entire sensor element of the rain sensor in MID technology may be formed integrally with the upper housing part and the MID component part, respectively. The base body of the upper housing part and of the MID component part, respectively, is preferably made, for example, of a plastic, for example a thermoplastic, which is weatherproof, i.e., for instance, waterproof and insensitive to incident solar radiation. The sensor conductor elements may at least in part be made of a metal, such as copper, and may, for example, form conductive paths or electrodes of the sensor element.

Due to the configuration of the upper housing part as an MID component part having parts of the sensor element integrated therein or having the sensor element integrated therein, an outer surface of the upper housing part - i.e., a surface of the upper housing part which forms an outer surface of the housing - may simultaneously serve as a sensor surface and a wetting surface, respectively, the rain sensor being able to detect whether and/or how much liquid is located on the sensor surface. Integration of the upper housing part and the sensor element into a single component part allows effective protection against a penetration of liquid, for example, rain water, into the housing. For example, an outer surface of the upper housing part serving as a sensor surface may be formed integrally and without openings, no sealing, for example, being necessary between the upper housing part and the sensor element in this regard. Due to the fact that such a sealing, in particular on a wetting surface of a rain sensor, always constitutes a weak point with respect to the penetration of liquid inside the housing, the rain sensor according to the invention provides effective protection against a penetration of liquid into the housing. In addition, said integration may reduce the number of individual component parts required for producing the rain sensor, which simplifies production of the rain sensor substantially.

A sealing - for example, a sealant, such as a silicone mass or a sealing ring, may be provided between the upper housing part and the lower housing part to allow better protection against a penetration of liquid into the housing. However, for this purpose, the upper housing part and the lower housing part may also form a labyrinth seal along the housing division line or housing connection line, respectively.

According to an embodiment of the invention, the lower housing part is provided in a tub shape having an opening defined due to the tub shape, along which the housing division line is extending, the opening being closed in a sealing manner by the upper housing part. The opening may, for example, be approximately circular.

Parts of the sensor element or other parts, for example, electronic component parts of the rain sensor, may be received in the cavity formed by the tub shape. In addition, increased rigidity or stability of the housing can be achieved by the outwardly curved tub shape.

According to an embodiment of the invention, the upper housing part and the MID component part, respectively, is provided in a dome shape having a convex curvature extending from the lower housing part. Due to the outwardly curved dome shape, an increased rigidity or stability of the housing can be achieved. Besides, this shaping can guarantee the running-off of liquid, for example, rain water, from an outer surface of the upper housing part which, for example, serves as sensor surface and wetting surface, respectively. MID technology is in particular suitable for realizing such a dome-shaped upper housing part and such a convex sensor surface, respectively. In addition, any other shapes of the upper housing part may easily be realized by means of this technology.

According to an embodiment of the invention, the sensor conductor elements are formed integrally with the upper housing part and the MID component part, respectively, on an outer surface of the upper housing part and the MID component part, respectively, and are covered with a coat of lacquer, or are formed integrally with the upper housing part and the MID component part, respectively, on an interior surface of the upper housing part and the MID component part, respectively, the rain sensor, in addition, preferably comprising an evaluation unit which is connected to the sensor conductor elements and by which a variation of the capacity of a capacitor formed by the sensor conductor elements, which is due to varying humidity, may be detected. Thus, the sensor conductor elements form the electrodes of a capacitor in this case, which acts as a capacitive sensor element.

Due to the arrangement and shape of the sensor conductor elements, a desired distribution of the electric stray field may be set, which is generated when a capacitor voltage is applied between the sensor conductor elements. For example, the sensor element may comprise two sensor conductor elements which are formed integrally with the upper housing part on an interior surface of the upper housing part - i.e., on a surface of the upper housing part forming an interior surface of the housing, and which are arranged in such a manner that the stray field extends into the region of an outer surface of the upper housing part serving as a sensor surface, when a capacitor voltage is applied. Alternatively, two sensor conductor elements may be formed on an outer surface of the upper housing part integrally therewith, and may be covered with a liquid-repellent protective layer, for example, with a lacquer layer, for protection against humidity. The two sensor conductor elements may be formed as concentrically arranged conductor elements, for example, as concentrically arranged conductive surfaces, a first one of the sensor conductor elements being entirely surrounded by the second one of the sensor conductor elements. However, the two sensor conductor elements may also be provided in a comb-like shape each, and may be arranged in an interlocked manner.

The evaluation unit may be provided in the form of a circuit board on which the electronic component parts necessary for the evaluation are provided and are interconnected correspondingly. The evaluation unit may be received within the housing and may, for example, be fixed to the upper housing part or the lower housing part, or may be formed integrally therewith.

If, for example, rain water hits a sensor surface interspersed with the stray field in the region of the stray field, the dielectric constant and hence the capacity of the capacitor change in this region, no electric contact being necessary between the sensor conductor electrodes forming the electrodes of the capacitor and the liquid to be detected. The capacity change can be detected and evaluated by the evaluation unit, wherein a reproducible value of the capacity may be determined, for example, as a function of the corresponding wetting degree of the sensor surface, and, for example, a control signal may be generated as a result of the evaluation, which can be transmitted to an external device to be controlled.

According to an embodiment of the invention, the sensor conductor elements are formed integrally with the upper housing part and the MID component part, respectively, on an outer surface of the upper housing part and the MID component part, respectively, and are provided to be exposed to the exterior environment, wherein the rain sensor preferably also comprises an electronic evaluation unit which is connected to the sensor conductor elements and by which a variation of the electric resistance between the sensor conductor elements, which occurs due to varying humidity, can be detected. Hence, the sensor conductor elements form an electric resistance in this case, which acts as a resistive sensor element.

For example, the sensor element may comprise two sensor conductor elements which are formed on an outer surface of the upper housing part acting as a sensor surface integrally therewith and at a distance from each other, so that there is a high electric resistance between them in a dry state, whereas the distance is bridged and an electrically conductive contact is generated between the two sensor conductor elements if the sensor surface is wetted with rain water, for example, wherein the change in resistance may, for example, be detected by means of applying a measurement current or a measurement voltage to the sensor conductor elements, and wherein a reproducible value of the resistance may be evaluated, for example, as a function of the corresponding wetting degree of the sensor surface.

In analogy to the above-described internally provided sensor conductor elements, the here described externally provided sensor conductor elements may, for example, also be provided as concentrically arranged conductor elements or may be provided in a comb-like shape each, and may be arranged in an interlocked manner. Here, the evaluation unit may also be provided in the form of a circuit board on which the electronic component parts required for the evaluation are provided and interconnected correspondingly, wherein the evaluation unit can be provided within the housing as described above.

According to an embodiment of the invention, the upper housing part and the MID component part, respectively, comprises a heating resistor formed integrally therewith in the form of an electrically conductive heating resistor conductor element. The heating resistor conductor element may, for example, be a high-resistance conductor element formed in MID technology on and/or in the base body of the MID component part, which may be arranged on an interior surface of the upper housing part and the MID component part, respectively.

The heating resistor may, for example, be connected to an electronic control unit of the rain sensor, by means of which a voltage can be applied to the heating resistor if necessary, so that the heating resistor may heat the housing and the upper housing part, respectively. Thus, the heater may be activated if the ambient temperature falls below a predefined level, so that the upper housing part and the MID component part, respectively, can be prevented from steaming up or freezing up. In addition, the heater may be activated if a liquid has been detected on a sensor surface of the upper housing part, so as to enable a fast drying of the sensor surface.

According to an embodiment of the invention, the upper housing part and the MID component part, respectively, comprises an antenna formed integrally therewith, for transmitting and/or receiving electromagnetic signals, in the form of an electrically conductive antenna conductor element. The antenna conductor element may, for example, be a conductor element formed in MID technology on and/or in the base body of the MID component part, which may be arranged on an inner surface of the upper housing part and the MID component part, respectively.

The antenna may be connected to an electronic control unit of the rain sensor, so that a radio signal may be emitted through the antenna and may be transmitted to an external receiver if required upon detection of rain water by the sensor element, for example, so as to trigger a predefined action, for example, for closing a roof window. In addition, the antenna may enable reception of a radio signal from an external transmitter, by means of which, for example, the rain sensor can be activated or deactivated or programmed otherwise.

According to an embodiment of the invention, the rain sensor further comprises an evaluation electronics with electronic component parts, which is connected to the sensor conductor elements and which comprises conductive paths electrically connecting the electronic component parts to each other, which are integrated at least in part in MID technology into the upper housing part and the MID component part, respectively.

Hence, the upper housing part and the MID component part, respectively, may be provided as a circuit board in MID technology, wherein conductive paths forming part of the evaluation electronics may be formed of an electrically conductive material - for example, a metal, such as copper, on and/or in the base body of the MID component part. For example, the above-mentioned evaluation units and electric control electronics may form part of the evaluation electronics and/or may be electrically connected with the evaluation electronics.

According to an embodiment of the invention, the rain sensor further comprises an evaluation electronics having electronic component parts, wherein the electronic component parts are mounted at least in part to an interior surface, for example, directly to the interior surface of the upper housing part and the MID component part, respectively, and/or wherein the electronic component parts are arranged at least in part on a circuit board (separate from the upper housing part) which is mounted in the housing - for example, to an interior surface of the upper housing part.

For example, the interior surface of the upper housing part and the MID component part, respectively, may be formed as a circuit board with conductive paths in MID technology as described above, wherein the entire component parts or at least a part of the component parts of the evaluation electronics may be mounted to the interior surface and may be connected electrically to other component parts of the evaluation electronics by means of the conductive paths. If the entire component parts of the evaluation electronics are mounted to the interior surface of the upper housing part and the MID component part, respectively, no additional separate circuit board is required. However, also the entirety or at least a part of the component parts of the evaluation electronics may be mounted to a separate circuit board that may be received within the housing, and may be attached, for example, to the lower housing part or to the upper housing part, for example, to an interior surface of the upper housing part.

According to an embodiment of the invention, the rain sensor further comprises a cover ring circumferentially surrounding the upper housing part, the upper housing part preferably comprising a circumferential shoulder on which the cover ring rests circumferentially with a horizontal portion, the cover ring preferably being provided with a vertical portion in the form of a circumferential skirt extending from its horizontal portion, which extends to beyond the housing division line, so that it is covered by the vertical portion.

The upper housing part may be connected to the lower housing part by means of the cover ring. For example, the cover ring may be connected to the lower housing part - for example, by means of screws or by means of a snap connection - wherein the upper housing part can be positioned between the cover ring and the lower housing part and can be pressed onto the lower housing part by the horizontal portion of the cover ring.

Due to the fact that the housing division line is covered by the vertical portion of the cover ring, penetration of liquid into the housing can be made even more difficult. Moreover, this cover may protect a sealing possibly provided between the upper housing part and the lower housing part against climatic conditions, especially against ultraviolet radiation and pollution, and may thus increase the life span of such a sealing.

A circuit board arranged in the housing may comprise an outer circumference corresponding to the outer circumference of the housing division line and may be clamped between the upper housing part and the lower housing part with this outer circumference thereby forming a tight clamping connection. In this respect, sealants, such as sealing rings made of rubber, for example, may be arranged between the upper housing part and the circuit board as well as between the lower housing part and the circuit board, which sealing rings extend circumferentially along the outer circumference of the housing division line.

Possible connecting means, such as screws, may extend along the outer circumference of the housing division line through through-holes, if applicable through through-holes in the circuit board, into blind holes in the lower housing part provided with an internal thread. The blind holes in the lower housing part may be formed in sockets that are provided on the inner circumferential surface of the lower housing part. The through-holes are, for example, formed through the circumferential shoulder possibly provided on the upper housing part, the horizontal portion of the possibly provided cover ring covering the screws inserted in the through-holes.

The vertical portion of the cover ring is, for example, received in a circumferential recess provided in the upper housing part and/or in the lower housing part in the region of the housing division line, wherein it is preferably radially outside flush with the radial exterior of the portion of the lower housing part adjacent to the recess.

According to an embodiment of the invention, the upper housing part and the MID component part, respectively, comprises in each of the preceding embodiments a first connecting means formed integrally therewith, which can cooperate with a second connecting means formed on the lower housing part integrally therewith, thereby forming a fixed connection.

For example, the upper housing part may comprise one or more latching members, such as latch hooks, which - for example, in a circumferential region of the upper housing part - are formed integrally therewith, for example as a portion of the base body, and are able to engage with associated recesses formed in the lower housing part, so that the two housing parts can be connected fixedly to each other by means of a latching connection or a snap connection. However, one or more latching members, such as latch hooks which are formed integrally with the lower housing part may also be provided, which are able to engage with associated recesses formed in the upper housing part. Thus, the upper housing part and the lower housing part can be connected fixedly to each other without any additional connection means, no through-holes, for example, such as for screws serving as connection means having to be provided in the upper housing part, whereby additional protection against a penetration of liquid into the housing is provided, and whereby the outer appearance of the rain sensor can be designed in a visually very appealing manner. In addition, the shape of the upper housing part can be configured at discretion, for example no further connecting means (such as the cover ring according to the above-described embodiment) having to be taken into consideration when designing the same. Moreover, the number of individual components required for manufacturing the rain sensor can be reduced further, due to the integral configuration of the connection means.

In the following paragraphs, the invention shall be described on the basis of preferred exemplary embodiments with reference to the attached drawings, in which:
Figure 1 is a sectional view of a rain sensor according to an embodiment of the invention,
Figure 2 is a sectional view of a rain sensor according to a further embodiment,
Figure 3 is an exploded view of a rain sensor according to a further embodiment,
Figure 4 is a schematic view of an upper housing part of the rain sensor according to Figure 3,
Figure 5 is an illustration of the rain sensor according to Figure 3.

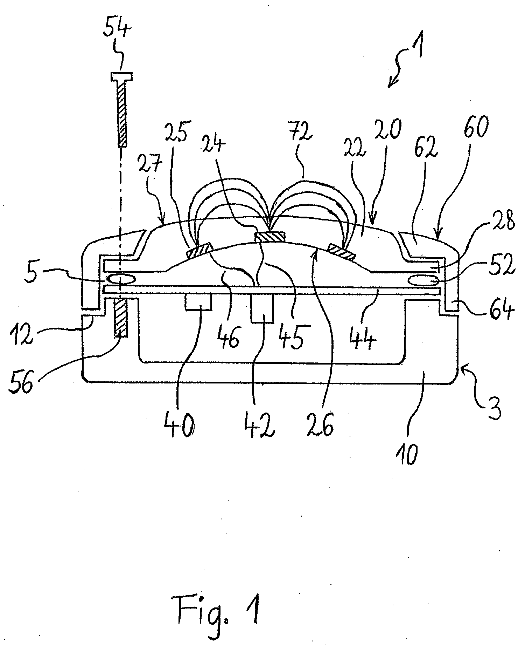

According to Figure 1, a rain sensor 1 according to an embodiment of the invention comprises a housing 3 which consists of a lower housing part 10 and an upper housing part 20 which are separated from each other by a housing division line 5. The lower housing part 10 and the upper housing part 20 are connected to each other in a waterproof manner along the housing division line 5, and enclose an interior of the housing in a waterproof manner. The upper housing part 20 is formed as an MID component part and is composed of a base body 22 made of an electrically insulating material, such as plastic, and sensor conductor elements 24, 25 formed in the base body 22 and made of an electrically conductive material, for example, a metal, such as copper. In the present embodiment, the sensor conductor elements 24, 25 are provided as concentrically arranged, plane conductor elements 24, 25 and constitute the electrodes of a capacitor which serves as a capacitive sensor element for detecting humidity, especially rain water.

The lower housing part 10 is provided in a tub shape and is open upwards, i.e. comprises an opening defined by the tub shape and showing upwards towards the upper housing part 20. The housing division line 5 extends circumferentially along the opening formed by the tub shape, i.e., along the edge of the tub. This opening is covered by the upper housing part 20 located above the lower housing part 10 and is closed in a liquid-tight manner, for example in a waterproof manner.

The upper housing part 20 is formed to be curved upwards, i.e., is dome-shaped with a convex curvature extending away from the lower housing part 10.

The sensor conductor elements 24, 25 are configured as concentrically arranged, plane conductor elements 24, 25 which are arranged on an interior surface 26 of the upper housing part 20 and the base body 22, respectively, and are formed integrally with the upper housing part 20, wherein the first sensor conductor element 24 is arranged in the form of a circular plane electrode 24 in the centre at the highest point of the dome-shaped upper housing part 20, and wherein the second sensor conductor element 25 is arranged in the form of a ring-shaped plane electrode 25 concentrically with the first sensor conductor element 24, and thus encloses the first sensor conductor element 24 in a ring-like manner. However, the first and second sensor conductor elements 24, 25 may also be provided in a comb shape each and may be arranged on the interior surface 26 of the upper housing part in an interlocked manner.

The rain sensor 1 comprises an evaluation electronics 40, the evaluation electronics 40 and its electronic component parts, respectively, being arranged on a circuit board 44. The evaluation electronics comprises, for example, an electronic evaluation unit 42 mounted on the circuit board 44. The circuit board 44 has an outer circumference corresponding to the housing division line 5 and is clamped with this outer circumference between the lower housing part 10 and the upper housing part 20 thereby forming a waterproof clamping connection. In the present embodiment, a sealing ring 52 - for example, made of rubber, is provided between the upper housing part 20 and the circuit board 44, the sealing ring 52 extending along the housing division line 5. In addition or as an alternative, a separate sealing ring (not shown) may be provided between the circuit board 44 and the lower housing part 10.

The evaluation unit 42 is connected to the sensor conductor elements 24, 25 by electric connections 45, 46, and is configured to detect a variation of the capacity of the capacitor formed by the sensor conductor elements 24, 25, which is due to varying humidity. Here, an outer surface 27 of the upper housing part 20 serves as a sensor and wetting surface, respectively, wherein the capacity of the capacitor formed by the sensor conductor elements 24, 25 depends on whether or how much liquid, for example, rain water, is located on the sensor surface interspersed with the stray field 72 of the capacitor, which is shown in Figure 1 by arcuate field lines.

The upper housing part 20 comprises a circumferential shoulder 28 extending horizontally from the lower base of the dome shape of the upper housing part 20 and extending along the housing division line 5. The upper housing part 20 is fixedly connected to the lower housing part 10 or pressed onto the lower housing part 10 - for example, by means of fastening screws (not shown in Figure 1) extending through through-holes in the shoulder 28, the sealing ring 52 and the circuit plate 44 into blind holes in the lower housing part 10, provided with a corresponding internal thread -, so that a liquid-tight connection is provided between the lower housing part 10 and the upper housing part 20. The blind holes in the lower housing part 10 may be formed in the side wall of the lower housing part 10 or in sockets formed on the inner circumferential surface of the lower housing part 10.

In the embodiment according to Figure 1, the rain sensor 1 further comprises a cover ring 60 circumferentially surrounding the upper housing part 20, wherein the cover ring 60 circumferentially rests on the shoulder 28 of the upper housing part 20 with a horizontal portion 62 thereof, so that the horizontal portion 62 optically covers the fastening screws located in the through-holes of the shoulder 28. The shape of the inner circumferential edge of the horizontal portion 62 is adapted to the dome shape of the upper housing part 20, so that a form-fit connection is provided between these two shapes - and between the cover ring 60 and the upper housing part 20, respectively. The cover ring 60 comprises a vertical portion 64 in the form of a circumferential skirt, which extends from the outer circumferential edge of the horizontal portion 62 vertically downwards over the housing division line 5, so that the housing division line 5 and the connecting area between the upper housing part 20 and the lower housing part 10 is covered by the vertical portion 64 and is hence overlapped optically and protected against climatic conditions from outside. The lower end of the vertical portion 64 of the cover ring 60 is received in a recess 12 which is formed circumferentially at the upper outer edge of the upper housing part 20 in the region of the housing division line 5, so that the vertical portion 64 is radially outside flush with the radial exterior of the portion of the lower housing part 10 adjacent to the recess 12.

The cover ring 60 is fixedly connected to the upper housing part 20 and the lower housing part 10 - for example, by means of an adhesive or by one or a few screws 54 which extend through correspondingly associated through-holes in the horizontal portion 62 of the cover ring 60, the shoulder 28 of the upper housing part 20, the sealing ring 52 and the circuit board 44 into blind holes 56 in the lower housing part 10, provided with a corresponding internal thread. It is also possible to omit the above-described fastening screws and, instead of that, to connect the upper housing part 20 fixedly with the lower housing part 10 by means of the screws 54.

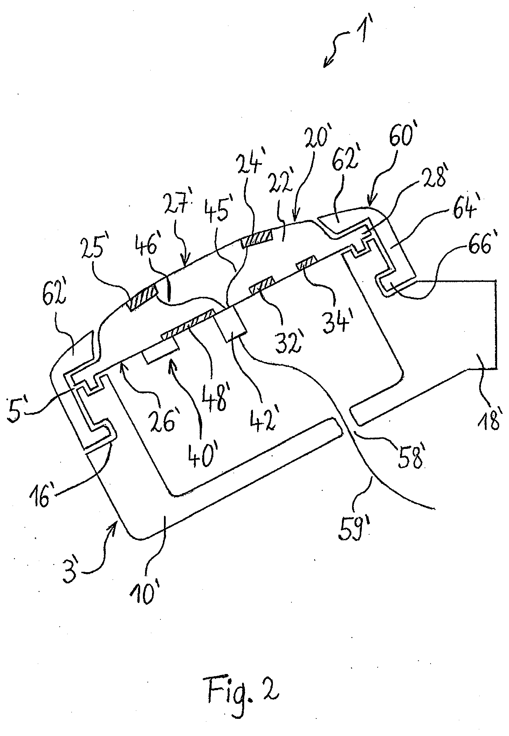

Figure 2 schematically illustrates a rain sensor 1' according to a further embodiment of the invention. Here, identical parts are provided with the same reference numbers as in the first embodiment, these reference numbers being provided with an apostrophe for identification, and a repeated description of such identical parts and features being omitted.

The rain sensor 1' comprises a housing 3' having a lower housing part 10' and an upper housing part 20' with an outer surface 27' curved outwards in a convex manner and having a plane interior surface 26', wherein the lower housing part 10' and the upper housing part 20' are separated from each other by a housing separation line 5'. The upper housing part 20' formed as an MID component part comprises two sensor conductor elements 24', 25' formed in a base body 22', which are formed on the outer surface 27' of the upper housing part 20' integrally therewith and exposed to the exterior environment. The sensor conductor parts 24', 25' are, for example, formed in a comb-shape each and are arranged to be interlocked. The sensor conductor elements 24', 25' form an electric resistance which serves as a resistive sensor element for detecting humidity, especially rain water.

The rain sensor 1' comprises an electronic evaluation unit 42', wherein the evaluation unit 42' and its electronic component parts, respectively, are mounted on the interior surface 26' of the upper housing part 20'. The evaluation unit 42' is connected to the sensor conductor elements 24', 25' by electric connections 45', 46', and is configured to detect a variation of the electric resistance between the sensor conductor elements 24', 25', which is due to varying humidity. The electric connections 45', 46' may, for example, be configured as electrically conductive conductor elements formed in MID technology in the base body 22'.

The upper housing part 20' comprises a heating resistor 32' formed integrally therewith, in the form of an electrically conductive heating resistor conductor element 32', which is formed in MID technology in the base body 22' on the interior surface 26' of the upper housing part 20'.

In addition, the upper housing part 20' comprises an antenna 34' formed integrally therewith, for transmitting and/or receiving electromagnetic signals, in the form of an electrically conductive antenna conductor element 34', which is formed in MID technology in the base body 22' at the interior surface 26' of the upper housing part 20'.

The rain sensor 1' comprises an evaluation electronics 40' having electronic component parts, which is connected to the sensor conductor elements 24', 25'. The evaluation electronics 40' may, for example, comprise a control electronics configured to control the heating resistor 32' and/or the antenna 34', and/or the evaluation unit 42'.

The evaluation electronics 40' comprises conductive paths 48' which connect the electronic component parts of the evaluation electronics 40' to each other. In the present embodiment, the conductive paths 48' are provided in the form of electrically conductive conductor elements 48' in MID technology in the base body 22' on the interior surface 26' of the upper housing part 20'.

The component parts of the evaluation electronics 40' are mounted to the interior surface 26' of the upper housing part 20' and are connected to each other electrically through the conductive paths 48' formed in the base body 22'. Thus, the interior surface 26' is configured as a circuit board in MID technology, on which the conductive paths 48' and the electronic component parts of the evaluation electronics 40' are arranged. Thereby, the number of component parts of the rain sensor can be reduced further, and therefore even better protection is possible against a penetration of liquid into the housing.

In the embodiment according to Figure 2, the entirety of all electronic component parts of the evaluation electronics 40' is mounted to the interior surface 26' of the upper housing part 20'. However, it is also possible to mount only a part of the component parts of the evaluation electronics 40' to the interior surface 26' and to mount another part on a separate circuit board which may, for example, be received within the housing interior in a manner similar to the circuit board 44 of the embodiment according to Figure 1.

In the embodiment according to Figure 2, the lower housing part 10' and the upper housing part 20' are connected to each other by a labyrinth seal by corresponding configurations of the lower side of the shoulder 28' of the upper housing part 20' and the upper side of the tub edge of the lower housing part 10', mating in a form-fit manner, no further sealants being provided.

In addition, the rain sensor 1' comprises a cover ring 60' with a horizontal portion 62', a vertical portion 64' and a circumferential projecting portion 66' extending from the lower end of the vertical portion 64' horizontally inwards, which engages in a form-fit manner into an associated recess 16' formed on the lower housing part 10' in a radially circumferential manner, thereby forming a snap connection, wherein the upper housing part 20' is pressed onto the lower housing part 10' by the horizontal portion 62' of the cover ring 60' thereby forming a liquid-proof connection.

The lower housing part 10' comprises a through-hole 58' sealed by a rubber plug (not shown), through which, for example, one or more electrical connection lines 59' coming from outside may be guided into the interior space of the housing, which may be connected to the evaluation electronics 40' and/or which may serve for supplying the rain sensor 1' with current and voltage, respectively.

Moreover, a fixing device 18' is formed on the lower housing part 10' integrally therewith, by means of which the rain sensor 1' can be attached, for example, to a vertical wall or to a vertical pole in such a manner that the sensor surface and the outer surface 27' of the upper housing part 20', respectively, is inclined in the fixed state, so that rain water, for example, can run off the outer surface 27' more easily.

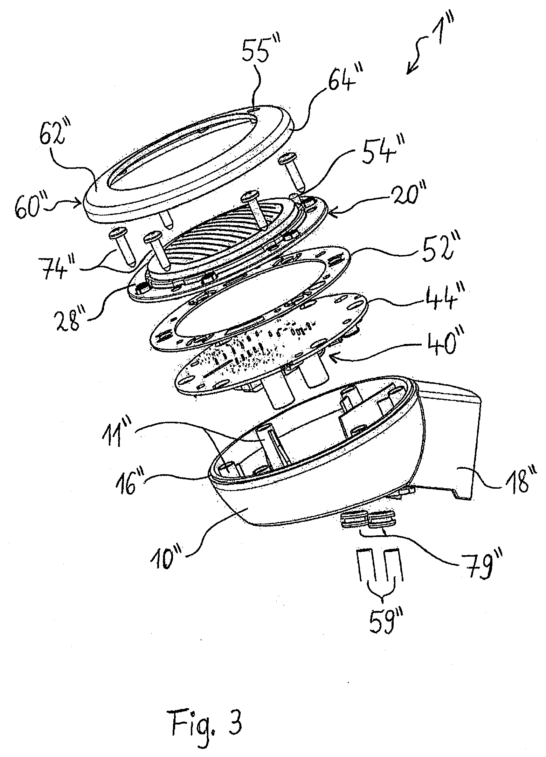

Figures 3 to 5 schematically show a rain sensor 1" and parts thereof, respectively, according to a further embodiment of the invention. In this respect, the same reference numbers as in the embodiments according to Figures 1 and 2 are used for identical parts, these reference numbers being provided with two apostrophes for identification, and a repeated description of such identical parts and features being omitted.

The rain sensor 1" comprises a housing 3" having a tub-shaped lower housing part 10" with an approximately circular opening formed due to the tub shape, wherein two through-holes are provided in the bottom of the lower housing part 10" for passing electrical connections 59", for example cables, for example electric power cables and/or signal transmission cables, therethrough, wherein the through-holes are sealed, for example, by associated sealing sleeves and rubber seals 79", respectively. The lower housing part 10" comprises a fixing device 18" formed integrally therewith, by means of which the rain sensor 1" may be fixed, for example, to a wall or to a pole.

A circuit board 44" and a sealing ring 52", each having an outer circumference adapted to the shape of the opening, are clamped between an upper housing part 20", the shape of which is also adapted to the shape of the opening, and the lower housing part 10", thereby forming a liquid-tight clamping connection. On the circuit board 44", for example, the electronic component parts of an evaluation electronics 40" of the rain sensor 1" are arranged.

The upper housing part 20" formed as an MID component part is formed in a dome-shape and comprises a circumferential shoulder 28" forming its outer circumference, wherein the upper housing part 20" is fixedly connected to the lower housing part 10" by means of fixing screws 74" which extend through through-holes in the shoulder 28", the sealing ring 52" and the circuit board 44" into blind holes in the lower housing part 10", provided with a corresponding internal thread. The blind holes in the lower housing part 10" are formed in sockets 11" which are formed on the inner circumferential surface of the lower housing part 10".

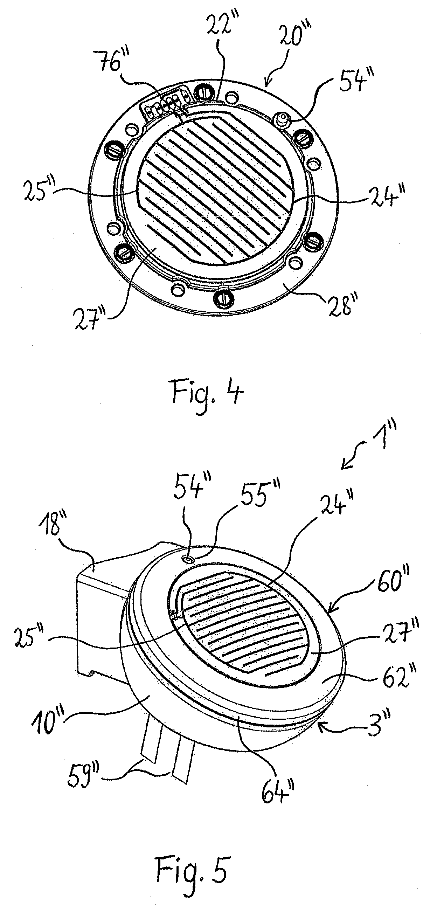

A cover ring 60" surrounding the upper housing part 20" along the outer circumference thereof rests on the shoulder 28" of the upper housing part 20" with a horizontal portion 62" thereof, the fastening screws 74" inserted in the through-holes of the shoulder 28" being covered optically (see Figure 5). The cover ring 60" comprises a vertical portion 64" which extends from the outer circumferential edge of the horizontal portion 62" vertically downwards to beyond the connection region between the lower housing part 10" and the upper housing part 20", wherein the lower end of the vertical portion 64" of the cover ring 60" is received in a recess 16" formed at the upper outer circumferential edge of the upper housing part 20" in such a manner that the vertical portion 64" is radially outside flush with the radial exterior of the lower housing part 10".

In the embodiment according to Figures 3 to 5, the cover ring 60" is fixedly connected to the upper housing part 20" by means of a latch hook 54" formed on the shoulder 28" of the upper housing part 20" and having, for example a mushroom-shaped free end, which engages with an associated through-hole 55" formed at the horizontal portion 62" of the cover ring 60". However, it is also possible to form, alternatively or additionally, one or more latch hooks on the lower side of the horizontal portion 62" of the cover ring 60", which engage with associated recesses formed in the lower housing part 10", in this case no through-holes having to be formed in the cover ring 60". However, it is also possible that the upper housing part 20" comprises one or more latch hooks (not shown) formed integrally with the upper housing part 20" in a circumferential region thereof, which engage with associated recesses (not shown) formed in the lower housing part 10", no cover ring having to be provided in this case.

The upper housing part 20" comprises two sensor conductor elements 24", 25" formed in a base body 22" thereof, which are formed on an outer surface 27" of the upper housing part 20" integrally therewith (see, for example, Figure 4), and which are coated with a watertight lacquer coat (not shown). The sensor conductor elements 24", 25" are each formed in a comb-shape and are arranged in an interlocked manner thereby forming a capacitor acting as a capacitive sensor element, a contacting point 76" for tapping electrical signals from the two sensor conductor elements 24", 25" being provided at a position on the shoulder 28". The contacting point 76" is covered by the horizontal portion 62" of the cover ring 60" and is hence protected against climatic conditions, for example.

## Claims

1. Rain sensor having a housing (3, 3') closed all around and in a waterproof manner, comprising a lower housing part (10, 10') and an upper housing part (20, 20') separate therefrom, wherein the lower housing part (10, 10') and the upper housing part (20, 20') are connected to each other especially along a housing division line (5, 5') to thereby form the housing (3, 3'), and wherein the upper housing part (20, 20') comprises a component part comprising a base body (22, 22') made of an electrically insulating material, which describes the external shape of the upper housing part, and sensor conductor elements (24, 25, 24', 25') made of an electrically conductive material, formed on and/or in the base body (22, 22'), which sensor conductor elements form at least part of a sensor element for detecting humidity, especially rain, **characterized in that** said component part is a Molded Interconnect Device (MID).

2. Rain sensor according to claim 1, wherein the lower housing part (10, 10') is provided in a tub shape with an opening defined due to the tub shape, along which the housing division line (5, 5') is extending, the opening being closed in a sealing manner by the upper housing part (20, 20').

3. Rain sensor according to claim 1 or 2, wherein the upper housing part (20, 20') is formed in a dome shape having a convex curvature extending from the lower housing part (10, 10').

4. Rain sensor according to any of claims 1 to 3, wherein the sensor conductor elements (24', 25') are formed on an outer surface (27') of the upper housing part (20') integrally with the upper housing part and exposed to the external environment, and wherein the rain sensor further preferably comprises an electronic evaluation unit (42') which is connected to the sensor conductor elements (24', 25') and by which a variation of the electrical resistance between the sensor conductor elements (24', 25'), which occurs due to varying humidity, can be detected.

5. Rain sensor according to any of claims 1 to 3, wherein the sensor conductor elements (24, 25, 24", 25") are formed integrally with the upper housing part on an outer surface (27") of the upper housing part (20") and are coated with a lacquer coat or are formed integrally with the upper housing part on an interior surface (26) of the upper housing part (20), and wherein the rain sensor further preferably comprises an electronic evaluation unit (42) which is connected to the sensor conductor elements (24, 25, 24", 25") and by which a variation of the capacity of a capacitor formed by the sensor conductor elements (24, 25, 24", 25"), which occurs due to varying humidity, can be detected.

6. Rain sensor according to any of claims 1 to 5, wherein the upper housing part (20') comprises a heating resistor (32') formed integrally therewith, in the form of an electrically conductive heating resistor conductor element.

7. Rain sensor according to any of claims 1 to 6, wherein the upper housing part (20') comprises an antenna (34') integrally formed therewith, for transmitting and/or receiving electromagnetic signals, in the form of an electrically conductive antenna conductor element.

8. Rain sensor according to any of claims 1 to 7, further having an evaluation electronics (40') having electronic component parts, which is connected to the sensor conductor elements (24', 25') and which comprises conductive paths (48') electrically connecting the electronic component parts with each other, which are integrated at least in part in MID technology into the upper housing part (20').

9. Rain sensor according to any of claims 1 to 8, further having an evaluation electronics (40, 40') having electronic component parts, wherein the electronic component parts are mounted at least in part to an interior surface (26'), for example, directly to the interior surface (26') of the upper housing part (20'), and/or wherein the electronic component parts are at least in part arranged on a circuit board (44) which is mounted in the housing (3, 3'), for example, on an interior surface of the upper housing part.

10. Rain sensor according to any of claims 1 to 9, further having a cover ring (60, 60') circumferentially surrounding the upper housing part (20, 20'), wherein the upper housing part preferably comprises a circumferential shoulder (28, 28') on which the cover ring (60, 60') rests circumferentially with a horizontal portion (62, 62'), and wherein the cover ring is preferably formed with a vertical portion (64, 64') in the form of a circumferential skirt which extends over the housing division line (5, 5'), so that it is covered by the vertical portion (64, 64').

## Patentansprüche

1. Regensensor mit einem rundum wasserdicht geschlossenen Gehäuse (3, 3'), welches ein Gehäuseunterteil (10, 10') und ein davon separates Gehäuseoberteil (20, 20') aufweist, wobei das Gehäuseunterteil (10, 10') und das Gehäuseoberteil (20, 20') unter Ausbildung des Gehäuses (3, 3'), insbesondere entlang einer Gehäusetrennlinie (5, 5'), miteinander verbunden sind und wobei das Gehäuseoberteil (20, 20') ein Bauteil aufweist, das einen Basiskörper (22, 22'), der aus einem elektrisch isolierenden Material gemacht ist und der die äußere Form des Gehäuseoberteils beschreibt, und Sensor-Leiterelemente (24, 25, 24', 25') aufweist, die aus einem elektrisch leitfähigen Material gemacht sind und die an dem und/oder in dem Basiskörper (22, 22') gebildet sind, wobei die Sensor-Leiterelemente zumindest einen Teil eines Sensorelements zum Erfassen von Feuchtigkeit, insbesondere von Regen, bilden, **dadurch gekennzeichnet, dass** das Bauteil ein Molded Interconnect Device (MID) ist.

2. Regensensor gemäß Anspruch 1, wobei das Gehäuseunterteil (10, 10') in einer Wannenform mit einer aufgrund der Wannenform definierten Öffnung vorgesehen ist, entlang welcher sich die Gehäusetrennlinie (5, 5') erstreckt, wobei die Öffnung von dem Gehäuseoberteil (20, 20') abgedichtet verschlossen wird.

3. Regensensor gemäß Anspruch 1 oder 2, wobei das Gehäuseoberteil (20, 20') in einer Kuppelform mit einer sich von dem Gehäuseunterteil (10, 10') erstreckenden konvexen Wölbung gebildet ist.

4. Regensensor gemäß irgendeinem der Ansprüche 1 bis 3, wobei die Sensor-Leiterelemente (24', 25') an einer Außenfläche (27') des Gehäuseoberteils (20') integral mit dem Gehäuseoberteil sowie zur Außenumgebung exponiert gebildet sind, und wobei der Regensensor ferner vorzugsweise eine elektronische Auswerteeinheit (42') aufweist, die mit den Sensor-Leiterelementen (24', 25') verbunden ist und von welcher eine aufgrund von variierender Feuchtigkeit auftretende Variation des elektrischen Widerstandes zwischen den Sensor-Leiterelementen (24', 25') detektiert werden kann.

5. Regensensor gemäß irgendeinem der Ansprüche 1 bis 3, wobei die Sensor-Leiterelemente (24, 25, 24", 25") an einer Außenfläche (27") des Gehäuseoberteils (20") integral mit dem Gehäuseoberteil ausgebildet und mit einer Lackschicht überzogen sind oder an einer Innenfläche (26) des Gehäuseoberteils (20) integral mit dem Gehäuseoberteil ausgebildet sind, und wobei der Regensensor ferner vorzugsweise eine elektronische Auswerteeinheit (42) aufweist, welche mit den Sensor-Leiterelementen (24, 25, 24", 25") verbunden ist und von welcher eine aufgrund variierender Feuchtigkeit auftretende Variation der Kapazität eines von den Sensor-Leiterelementen (24, 25, 24", 25") gebildeten Kondensators detektiert werden kann.

6. Regensensor gemäß irgendeinem der Ansprüche 1 bis 5, wobei das Gehäuseoberteil (20') einen mit demselben integral gebildeten Heizwiderstand (32') in Form eines elektrisch leitfähigen Heizwiderstand-Leiterelements aufweist.

7. Regensensor gemäß irgendeinem der Ansprüche 1 bis 6, wobei das Gehäuseoberteil (20') eine mit demselben integral gebildete Antenne (34'), zum Übertragen und/oder Empfangen elektromagnetischer Signale, in Form eines elektrisch leitfähigen Antennen-Leiterelements aufweist.

8. Regensensor nach irgendeinem der Ansprüche 1 bis 7, ferner mit einer Auswerteelektronik (40') mit elektronischen Bauelementen, die mit den Sensor-Leiterelementen (24', 25') verbunden ist und die die elektronischen Bauteile elektrisch miteinander verbindende Leiterbahnen (48') aufweist, welche zumindest teilweise in MID-Technologie in das Gehäuseoberteil (20') integriert sind.

9. Regensensor gemäß irgendeinem der Ansprüche 1 bis 8, ferner mit einer Auswerteelektronik (40, 40') mit elektronischen Bauelementen, wobei die elektronischen Bauelemente zumindest teilweise an einer Innenfläche (26'), z.B. direkt an der Innenfläche (26') des Gehäuseoberteils (20'), angebracht sind und/oder wobei die elektronischen Bauelemente zumindest teilweise auf einer Leiterplatte (44) angeordnet sind, die im Gehäuse (3, 3'), z.B. an einer Innenfläche des Gehäuseoberteils, angebracht ist.

10. Regensensor nach irgendeinem der Ansprüche 1 bis 9, ferner mit einem Abdeckring (60, 60'), welcher das Gehäuseoberteil (20, 20') umfänglich umgibt, wobei das Gehäuseoberteil vorzugsweise eine umlaufende Schulter (28, 28') aufweist, auf welcher der Abdeckring (60, 60') mit einem Horizontalabschnitt (62, 62') umlaufend aufliegt, und wobei der Abdeckring vorzugsweise mit einem Vertikalabschnitt (64, 64') in Form einer umlaufenden Schürze gebildet ist, welche sich über die Gehäusetrennlinie (5, 5') erstreckt, sodass sie vom Vertikalabschnitt (64, 64') abgedeckt ist.

## Revendications

1. Capteur de pluie possédant un logement (3, 3') fermé tout autour et d'une manière hermétique, comprenant une partie de logement inférieure (10, 10') et une partie de logement supérieure (20, 20') séparée de celle-ci, dans lequel la partie de logement inférieure (10, 10') et la partie de logement supérieure (20, 20') sont reliées l'une à l'autre en particulier le long d'une ligne de division de logement (5, 5') pour former ainsi le logement (3, 3'), et dans lequel la partie de logement supérieure (20, 20') comprend une partie constituante comprenant un corps de base (22, 22') constitué d'un matériau électriquement isolant, qui décrit la forme externe de la partie de logement supérieure, et d'éléments conducteurs capteurs (24, 25, 24', 25') constitués d'un matériau électroconducteur, formé sur et/ou dans le corps de base (22, 22'), lesquels éléments conducteurs capteurs formant au moins une partie d'un élément capteur pour détecter l'humidité, en particulier la pluie, **caractérisé en ce que** ladite partie constituante est un dispositif interconnecté moulé (DIM).

2. Capteur de pluie selon la revendication 1, dans lequel la partie de logement inférieure (10, 10') est prévue selon une forme de cuve ayant une ouverture selon la forme de cuve, le long de laquelle s'étend la ligne de division de logement (5, 5'), l'ouverture étant fermée d'une manière étanche par la partie de logement supérieure (20, 20').

3. Capteur de pluie selon la revendication 1 ou 2, dans lequel la partie de logement supérieure (20, 20') est formée selon une forme de dôme ayant une courbure convexe s'étendant depuis la partie de logement inférieure (10, 10').

4. Capteur de pluie selon l'une quelconque des revendications 1 à 3, dans lequel les éléments conducteurs capteurs (24', 25') sont formés sur une surface externe (27') de la partie de logement supérieure (20') d'un seul tenant avec la partie de logement supérieure et exposés à l'environnement externe, et dans lequel le capteur de pluie comprend en outre de préférence une unité d'évaluation électronique (42') qui est connectée aux éléments conducteurs capteurs (24', 25') et grâce à laquelle une variation de la résistance électrique entre les éléments conducteurs capteurs (24', 25'), qui se produit en raison de la variation d'humidité, peut être détectée.

5. Capteur de pluie selon l'une quelconque des revendications 1 à 3, dans lequel les éléments conducteurs capteurs (24, 25, 24", 25") sont formés d'un seul tenant avec la partie de logement supérieure sur une surface externe (27") de la partie de logement supérieure (20") et sont revêtus d'un revêtement laqué ou sont formés d'un seul tenant avec la partie de logement supérieure sur une surface intérieure (26) de la partie de logement supérieure (20), et dans lequel le capteur de pluie comprend de préférence en outre une unité d'évaluation électronique (42) qui est connectée aux éléments conducteurs capteurs (24, 25, 24", 25") et grâce à laquelle une variation de la capacité d'un condensateur formé par les éléments conducteurs capteurs (24, 25, 24", 25"), qui se produit en raison d'une variation d'humidité, peut être détectée.

6. Capteur de pluie selon l'une quelconque des revendications 1 à 5, dans lequel la partie de logement supérieure (20') comprend une résistance de chauffage (32') formée d'un seul tenant avec celle-ci, sous la forme d'un élément conducteur à résistance chauffante électroconducteur.

7. Capteur de pluie selon l'une quelconque des revendications 1 à 6, dans lequel la partie de logement supérieure (20') comprend une antenne (34') formée d'un seul tenant avec celle-ci, pour transmettre et/ou recevoir des signaux électromagnétiques, sous la forme d'un élément conducteur à antenne électroconductrice.

8. Capteur de pluie selon l'une quelconque des revendications 1 à 7, possédant en outre une électronique d'évaluation (40') possédant des éléments constituants électroniques, qui est connectée aux éléments conducteurs capteurs (24', 25') et qui comprend des chemins conducteurs (48') connectant électriquement ensemble les éléments constituants électroniques, qui sont intégrés au moins en partie dans la technologie DIM dans la partie de logement supérieure (20').

9. Capteur de pluie selon l'une quelconque des revendications 1 à 8, possédant en outre une électronique d'évaluation (40, 40') possédant des éléments constituants électroniques, dans lequel les éléments constituants électroniques sont montés au moins en partie sur une surface intérieure (26'), par exemple, directement sur la surface intérieure (26') de la partie de logement supérieure (20'), et/ou dans lequel les éléments constituants électroniques sont au moins en partie agencés sur une carte de circuit (44) qui est montée dans le logement (3, 3'), par exemple, sur une surface intérieure de la partie de logement supérieure.

10. Capteur de pluie selon l'une quelconque des revendications 1 à 9, possédant en outre un anneau de couvercle (60, 60') entourant circonférentiellement la partie de logement supérieure (20, 20'), dans lequel la partie de logement supérieure comprend de préférence un épaulement circonférentiel (28, 28') sur lequel l'anneau de couvercle (60, 60') repose circonférentiellement avec une partie horizontale (62, 62'), et dans lequel l'anneau de couvercle est de préférence formé d'une partie verticale (64, 64') sous la forme d'une jupe circonférentielle qui s'étend au-dessus de la ligne de division de logement (5, 5'), de sorte qu'elle est couverte par la partie verticale (64, 64').
